Europäisches Patentamt

European Patent Office

Office européen des brevets

(11) Numéro de publication: **0 172 088**
**A1**

## (12) DEMANDE DE BREVET EUROPEEN

(21) Numéro de dépôt: **85401513.8**

(22) Date de dépôt: **23.07.85**

(51) Int. Cl.⁴: **C 04 B 18/14**
**E 02 B 3/12**

(30) Priorité: **24.07.84 FR 8411689**

(43) Date de publication de la demande:
**19.02.86 Bulletin 86/8**

(84) Etats contractants désignés:
**BE DE GB IT NL SE**

(71) Demandeur: **Herbinger, Claude**
**23 avenue des Sycomores**
**F-75016 Paris(FR)**

(72) Inventeur: **Herbinger, Claude**
**23 avenue des Sycomores**
**F-75016 Paris(FR)**

(54) **Utilisation d'une scorie d'aciérie, généralement dénommée "scorie ld" comme agrégat pour l'élaboration de béton dense et de lests utilisables en off-shore.**

(57) L'invention couvre l'utilisation de la SCORIE LD comme agrégat dense pour l'élaboration de tous types de bétons denses et de lests utilisés principalement en off-shore et en atmosphère marine.

Les principales applications sont:
- les contrepoids
- les lests de plateformes gravitaires, de colonnes articulées, de bouées, de balises
- les blocs de protection d'ouvrages en mer.

EP 0 172 088 A1

La présente invention concerne l'utilisation de scories d'aciéries de densité élevée employées seules ou en association avec d'autres agrégats. Ces scories, généralement dénommées "SCORIES LD" sont utilisées dans l'invention, soit en blocs, soit en gravillons, soit en sable, soit en poudre, soit en mélange de granulométries, suivant les caractéristiques recherchées dans les bétons et dans les lests. Pour être employées comme agrégats denses dans les bétons ces scories doivent subir un certain nombre de traitements ayant pour but l'élimination complète des particules de chaux libre.

Un exemple de procédé mais qui n'est pas limitatif : les scories sont préalablement concassées et stockées à l'air libre pendant six mois à un an. Les pluies, pendant cette période de stockage, favorisent l'hydratation de la chaux qui, en gonflant, fragmente ces matériaux. Après cette période de 6 à 12 mois ces scories sont éventuellement soumises à nouveau à un concassage énergique, recriblées et mieux relavées. Un procédé de comminution très intéressant pour cette fabrication est le concassage à percution.

Les granulats ainsi obtenus présentent les caractéristiques suivantes :

Los Angelès : 12 à 16

Poids spécifique : 3.5 à 3.6

L'analyse chimique est plus ou moins variable mais cela n'est pas significatif pour la présente invention.

$CaO$ ....   46.5  à  48.7 %

$MgO$ ....   3.9  à  7.3 %

$R_2O_5$ ...   1.5  à  2.3 %

$SiO_2$ ...   11.0  à  14.2 %

$Fe$ .....   14.0  à  16.7 %

$Mn$ .....   3.0  à  7.0 %

$Al_2O_3$ ..   1.2  à  1.6 %

Jusqu'à présent les bétons denses étaient obtenus avec de la barytine pour les densités voisines de 3.5, avec des oxydes de fer pour les densités jusqu'à 4 environ, avec des ferro-silicium pour des densités supérieures.

Restaient les bétons de la gamme de 2.5 à 3. Les plus grands débouchés, pour de telles densités de béton sont : les ouvrages à la mer, cuirasses de digues, où la formule de Hudson privilège la densité blocs de formes diverses, tétrapodes, acropodes, etc... Un autre grand débouché se trouve être les embases de plateformes, embases de colonnes articulées, lestage de corps-morts, etc ...

2 -                                    0172088

Du fait des grands tonnages mis en jeu la notion de coût est déterminante. En raison du prix élevé des agrégats denses habituels, barytine ou oxydes de fer, les solution béton dense, pour de tels ouvrages, étaient rarement retenues. Il fallait donc trouver des agrégats permettant d'alourdir le béton, ayant des caractéristiques mécaniques élevées, tout en conservant des prix de revient voisins de ceux des bétons obtenus avec des agrégats traditionnels.

Exemples d'utilisation de bétons réalisés avec les agrégats selon l'invention : contrepoids de machines à laver, béton dense de revêtement de pipelines, cuirasses de digues, embases de plateformes et de colonnes articulées, lestage de corps-morts.

Selon l'invention les agrégats denses obtenus à partir de ces scories d'aciéries peuvent être utilisés seuls ou en mélange avec d'autres agrégats qui peuvent être, soit de densité et de prix équivalents, soit moins denses et plus économiques, soit plus denses pour doper un béton au niveau de la densité.

Exemples :

N° 1 - Un béton constitué uniquement par des agrégats selon l'invention

au m3 de béton - Scories LD 6/10mm ...    647 kgs

Scories LD 2/6mm ....    764 kgs

Scories LD 0/1mm ....  1.010 kgs

Ciment ..............    420 kgs

Eau ................    160 litres

Réducteur d'eau .....    0,9% du poids de ciment

Densité humide ......    3.004

N° 2 - Un béton constitué par les agrégats selon l'invention, en mélange avec des scories de plomb ou de zinc granulées :

au m3 de béton - Scories LD 6/10mm ...    647 kgs

Scories LD 2/6mm ....    764 Kgs

Scories zinc 0/800 u   1.050 Kgs

Ciment ..............    420 kgs

Eau ................    160 litres

Réducteur d'eau .....    0,9% du poids de ciment

Densité humide ......    3.038

Résultat flexion à 28 jours ......    8.55 MPa

Résultat compression à 28 jours .. 74.8 MPa

N° 3 - Un béton constitué par les agrégats selon l'invention, en mélange avec du minerai de fer :

au m3 de béton - Scories LD 10/15mm ..    1.000 kgs

Scories LD 6/10mm ...     245 kgs

Hématite SI 96 0/10mm   1.700 kgs

Ciment ..............      350 kgs

Eau ................      180 litres

Réducteur d'eau .....    0,9 % du poids de ciment

Densité humide ......    3.449

Résultat flexion à 28 jours ......    8.67 MPa

Résultat compression à 28 jours ..  61.22 MPa

Les agrégats selon l'invention trouvent un débouché tout indiqué chaque fois qu'on recherche des qualités mécaniques exceptionnelles, des densités élevées mais des prix voisins de ceux des agrégats traditionnels.

De tels agrégats denses peuvent être utilisés avec d'autres liants que le ciment, par exemple des bitumes ou des liants plastiques, tout en restant dans le cadre de la présente invention.

Ils peuvent être également utilisés sans liant pour obtenir des lests qui trouvent leur application en off-shore : lestage de plateformes gravitaires, embases de colonnes, etc.. ; que ce soit comme agrégats dans les bétons ou comme agrégats dans les lests, les agrégats selon l'invention sont parfaitement compatibles avec les autres bétons, les armatures métalliques, et sont donc, de ce fait, tout indiqués pour les emplois en off-shore.

En recherchant les meilleurs arrangements granulométriques, la densité des lests obtenus avec les agrégats selon l'invention dépasse toujours celle qu'on obtiendrait avec des agrégats ordinaires : granit, basalt, olivine.

Grâce à leur densité élevée les agrégats selon l'invention représentent le compromis densité/prix le plus satisfaisant, et dans les lests sans liant, le traitement préconisé pour l'élimination de la chaux libre n'est pas indispensable.

Comme pour les bétons, les agrégats selon l'invention peuvent être utilisés dans des lests, soit seuls, soit en mélange avec d'autres agrégats soit plus denses soit moins denses.

Pour des lests genre coulis sans ciment on peut remplacer, en volume, le ciment par cette même scorie d'aciérie broyée. Le poids spécifique de la scorie LD broyée est de 3.5/3.6, comparée à celle du ciment qui est de 3.05 à 3.1. Les 350 Kgs de ciment d'une formule béton deviennent donc sensiblement 400 kgs de Scorie LD broyée, soit un gain de 50 kgs/m3 environ.

_4

Il est également possible d'obtenir des coulis denses d'injection, soit avec la Scorie LD seule, soit en mélange avec d'autres agrégats.

Exemples :

N° 1 - Coulis dense réalisé avec la Scorie LD seule :

au m3 de coulis - Scorie LD 1/5mm ...    2.034 kgs

Scorie LD broyée ..    700 kgs

Eau ..............    230 litres

·Réducteur d'eau ...    1% du poids de Scorie LD broyée

Densité ...........    2.964

N° 2 - Coulis dense réalisé avec la Scorie LD en mélange avec de l'Hématite :

au m3 de coulis -    Hématite 0,1/3mm ...    2.865 kgs

Scorie LD broyée ...    700 kgs

Eau ...............    230 litres

Réducteur d'eau ....    1% du poids de Scorie LD broyée

Densité ..........    3.795

La scorie LD broyée peut être remplacée, dans les coulis, par de la Bentonite, de la sépiolite, de la cendre volante ou des oxydes de fer colloïdaux, ou tout autre filler, tout en restant dans le cadre de la présente invention.

REVENDICATIONS

1. Utilisation de ces scories, généralement dénommées Scories LD, pour la constitution de lests de densités supérieures à celles que l'on peut obtenir avec les agrégats traditionnels, ainsi que pour la constitution de bétons lourds et de coulis denses. Les scories selon l'invention sont caractérisées en ce que leur arrangement granulométrique permet d'obtenir une densité apparente jusqu'à 2.5 pour un poids spécifique de 3.5.

2. Lests préparés à partir des scories selon la revendication 1, caractérisés par le fait qu'ils sont d'une densité plus élevée que les lests préparés avec des agrégats traditionnels, et qu'ils sont surtout utilisables en atmosphère marine et en off-shore, n'entraînant pas de corrosion des armatures et pas de risque de corrosion des enveloppes métalliques.

3. Bétons denses élaborés à partir des scories selon la revendication 1, dont la densité peut être ajustée, soit par l'arrangement granulométrique des scories selon l'invention, soit en remplaçant tout ou partie d'une fraction granulométrique par des agrégats plus denses ou moins denses, suivant le cas. Ces bétons sont caractérisés par le fait qu'ils sont d'une densité supérieure à celle des bétons traditionnels et qu'ils sont utilisables en atmosphère marine et en off-shore ; pas de corrosion des enveloppes ou armatures métalliques et pas de risque de couplage électrogalvanique entre armatures de bétons de nature différente.

4. Coulis élaborés à partir des scories selon la revendication 1, caractérisés en ce qu'ils sont constitués en totalité par ces scories, autant pour la partie agrégat que pour la partie Filler résultant du broyage des scories selon l'invention, à la finesse nécessaire ; tout ou partie des agrégats peut être remplacée par d'autres agrégats plus denses ou moins denses, toujours liés par cette scorie broyée.

5. Coulis denses selon la revendication 4 caractérisés par le fait que la scorie LD broyée peut être mélangée avec de la Bentonite, de la Sépiolite, de la cendre volante ou des oxydes de fer colloïdaux, ou tout autre filler.

Office européen
des brevets

RAPPORT DE RECHERCHE EUROPEENNE

0172088.
Numéro de la demande

EP 85 40 1513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | BE-A- 562 926 (J. VALK) <br> * Page 2, lignes 11-17 et 31-33; page 1, lignes 1-6; revendication 7 * | 1-5 | C 04 B 18/14 <br> E 02 B 3/12 |
| | --- | | |
| Y | DE-B-1 293 072 (MANNESMANN) <br> * Revendication 1 * | 1-5 | |
| | --- | | |
| A | CHEMICAL ABSTRACTS, vol. 88, no. 4, 23 janvier 1978, page 227, réf. no. 26823n, Columbus, Ohio, US; V.A. ZAROVNYATNYKH et al.: "Sand for heavy concretes made from granulated slags from nickel production" & STROIT. MATER. IZDELIYA OSN. OTKHODOV PROM-STI. VERMIKULITA 1976, 88-95 | | |
| | | | **DOMAINES TECHNIQUES RECHERCHES (Int. Cl.4)** |
| | --- | | |
| A | BE-A- 446 733 (H. BOUTEILLER) | | C 04 B 18/00 <br> C 04 B 28/00 |
| | ----- | | |

Le présent rapport de recherche a été établi pour toutes les revendications

| Lieu de la recherche <br> LA HAYE | Date d'achèvement de la recherche <br> 31-10-1985 | Examinateur <br> DAELEMAN P.C.A. |
|---|---|---|